# EUROPEAN PATENT SPECIFICATION

(11) **EP 3 004 210 B1**
(45) Date of publication and mention of the grant of the patent: **12.07.2017**
(21) Application number: 14726343.8
(22) Date of filing: 23.05.2014
(51) Int. Cl.: C08G 69/26, C08G 73/10, C08L 77/06, C08L 79/08

(54) **POLYAMIDES COMPRISING ME-BHT, COMPOSITIONS COMPRISING SUCH A POLYAMIDE, SHAPED ARTICLES COMPRISING SUCH A POLYAMIDE OR SUCH A COMPOSITION**
POLYAMIDE MIT ME-BHT, ZUSAMMENSETZUNGEN MIT SOLCH EINEM POLYAMID, FORMARTIKEL MIT SOLCH EINEM POLYAMID ODER SOLCH EINER ZUSAMMENSETZUNG
POLYAMIDES RENFERMANT DU ME-BHT, COMPOSITIONS COMPRENANT LEDIT POLYAMIDE, D'ARTICLES FORMÉS COMPRENANT UN TEL POLYAMIDE OU UNE TELLE COMPOSITION

(30) Priority: 30.05.2013 EP 13290120
(43) Date of publication of application: 13.04.2016
(73) Proprietor: Rhodia Opérations S.A.S., 93306 Aubervilliers (FR); Solvay Specialty Polymers USA, LLC., Alpharetta, GA 30005 (US)
(72) Inventor: JEOL, Stéphane, Cumming, Georgia 30041 (US); FLORES, Joel, Alpharetta, GA 30004 (US)
(74) Representative: Benvenuti, Federica
(86) International application number: PCT/EP2014/060601
(87) International publication number: WO 2014/191303

(56) References cited:
- WO-A1-03/018689
- WO-A1-2005/100475
- WO-A1-2006/041523

## Description

### Cross-reference to related application

This application claims priority to European application No. 13290120.8 filed on May 30, 2013.

The instant invention relates to polymers, chosen from polyamide, polyimide and polyamideimide, comprising alkyl-BHT, compositions comprising such polymers, shaped article comprising such polymers and compositions, and method or obtaining such articles. The invention allows in particular obtaining flexible articles.

Many fields are in need of compositions exhibiting good flexibility properties. The flexibility properties may in particular be useful in combination with other properties, such as mechanical properties, thermo-mechanical properties, reasonable to good water reuptake, chemical resistance, thermal stability, etc.

Polyamide 12 is especially known for having interesting properties regarding flexibility, and is the polymer of choice when such a property is required. However, it may be insufficient in terms of pure flexibility and/or of mechanical properties, thermo-mechanical properties, barrier properties, water reuptake property and/or chemical resistance.

In particular in order to reach particularly good level of flexibility the polyamide 12 composition usually need the use of plasticizer, in particular in a relatively high amount.

The presence of plasticizer may have a few drawbacks, such as exudation, toxicity, loss of properties during time, loss of certain other properties, in particular relative to heat ageing.

There is thus a need for compositions solving in totality or partially the problems cited above or later in the specification, and in particular for a composition exhibiting a very good flexibility with very low amounts of plasticizer or without any plasticizer at all.

On the other hand, the document WO 03/018689, also published as US2003/0083441, discloses acid dyeable compositions comprising a polymer and a homo-polymeric additive comprising repeating units made of a diacid and of a diamine comprising in its chain one to five tertiary amine. However, this document is focusing on the problem of dyability. The invention relates to a polymer A, chosen from polyamide, polyimide and polyamideimide, obtained through polymerisation of at least:
a. one or several alkyl-BHT diamine chosen from methyl-bis hexamethylene triamine, also called Me-BHT, ethyl-bis hexamethylene triamine, n-propyl-bis hexamethylene triamine and/or i-propyl-bis hexamethylene triamine, and
b. one or several polycarboxylic acid, chosen from aliphatic polycarboxylic acids, aryl polycarboxylic acids, alkylaryl polycarboxylic acids and arylalkyl polycarboxylic acids,
said polymer A comprising a minimum amount of alkyl-BHT diamine of 1 mol% relative to the total mole amount of diamine monomers comprised in the polymer and in particular when the polymer A is an aliphatic homopolyamide, more particularly with Me-BHT, then the dicarboxylic acid is comprising at least 8 carbon atoms. In particular, when it is a copolymer, it may be a random copolymer. The invention relates to a composition comprising:
- at least 20 % by weight of a polymer A obtained through polymerisation of one or several alkyl-BHT diamine chosen from methyl-bis hexamethylene triamine, ethyl-bis hexamethylene triamine, n-propyl-bis hexamethylene triamine and/or i-propyl-bis hexamethylene triamine, the amount of alkyl BHT diamine being more than 1 mol% relative to the total mole amount of diamine monomers in the polymer, and one or several polycarboxylic acid, chosen from aliphatic polycarboxylic acids, aryl polycarboxylic acids, alkylaryl polycarboxylic acids and arylalkyl polycarboxylic acids,
- optionally phosphorous acid, and
- at least 0.1 % by weight of additional compound(s),
wherein the % by weight are based on the total weight of the composition.

The invention also concerns a shaped article comprising a composition comprising or consisting of a polymer A chosen from polyamide, polyimide and/or polyamideimide,
said polymer being obtained through polymerisation of at least:
a. one or several alkyl-BHT diamine chosen from methyl-bis hexamethylene triamine, ethyl-bis hexamethylene triamine, n-propyl-bis hexamethylene triamine and/or i-propyl-bis hexamethylene triamine, and
b. one or several polycarboxylic acid, chosen from aliphatic polycarboxylic acids, aryl polycarboxylic acids, alkylaryl polycarboxylic acids and arylalkyl polycarboxylic acids,
said polymer comprising a minimum amount of alkyl-BHT diamine of 1 mol% relative to the total mole amount of diamine monomers comprised in the polymer, in particular this shaped article is comprising a coating of the composition on a substrate, more particularly this article may comprise a metallic part. The invention also relates to a method for obtaining a shaped article comprising the following steps:
a) heating a composition comprising at least 20 % by weight of one or more polymer chosen from a polyamide or a polyimide obtained through polymerisation of at least:
   a. one or several alkyl-BHT diamine chosen from methyl-bis hexamethylene triamine, ethyl-bis hexamethylene triamine, n-propyl-bis hexamethylene triamine and/or i-propyl-bis hexamethylene triamine, and
   b. one or several polycarboxylic acid, chosen from aliphatic polycarboxylic acids, aryl polycarboxylic acids, alkylaryl polycarboxylic acids and arylalkyl polycarboxylic acids,
   said polymer comprising an amount of alkyl-BHT diamine of at least 1 mol% relative to the total mole amount of diamine monomers comprised in the polymer
b) shaping the heated composition or coating a substrate, and
c) recovering the article.

The invention also concerns the use of the polymer A or of a composition comprising such a polymer A for the preparation of articles exhibiting an excellent flexibility. The invention concerns the use of a polymer A as a plasticizer agent in a polymer composition.

The invention also concerns a method of coating a substrate, comprising the following steps:
- melting a polymer A or a composition comprising such a polymer A, as defined in the instant specification,
- coating the substrate with the melt, and
- recovering the substrate coated with a layer of at least 10 µm.

The invention also concerns a sintering process, in particular laser sintering, implying the use of a powder comprising the polymer A or a composition comprising such a polymer A.

Powder comprising particles comprising the polymer A or the composition comprising the polymer A. In particular said powder has a D50 from 10 to 200µm.

The D50 is the mean line dividing two parts of equal area the granulometric repartition curve in volume. The granulometric analysis may be done with a laser diffraction granulometer such as Mastersizer X with an optical bench from Malvern Instruments SA allowing characterizing the particles size between 2 and 2 000 µm. The distribution being volumic, the mean diameter corresponds to 50 % of the total volume of the particles. Furthermore, the given mean diameter corresponds to the diameter of an equivalent sphere ; thus supposing all the objects measured have a shape equivalent to a sphere.

The polymer A is chosen from polyamide, polyimide and polyamideimide, and is obtained through polymerisation of at least:
a. one or several alkyl-BHT diamine chosen from methyl-bis hexamethylene triamine, ethyl-bis hexamethylene triamine, n-propyl-bis hexamethylene triamine and/or i-propyl-bis hexamethylene triamine, and
b. one or several polycarboxylic acid, chosen from aliphatic polycarboxylic acids and aromatic polycarboxylic acids,
said polymer comprising a minimum amount of alkyl-BHT diamine of 1 mol% relative to the total mole amount of diamine monomers comprised in the polymer, said polymer is also referred to as polymer A,

in particular when the polymer A is a homopolyamide with Me-BHT then the dicarboxylic acid is comprising at least 8 carbon atoms.

Without otherwise specified, in the instant specification « polymer » means homo- or co-polymer.

More specifically, the polymer A may be homopolyamide, copolyamide, homopolyimide, copolyimide or polyamideimide, they respectively be referred to as homopolyamide A, copolyamide A, homopolyimide A, copolyimide A and polyamideimide A.

The polymer A may be semi-crystalline. By "semi-crystalline" is meant a polymer having an amorphous phase and a crystalline phase, in particular the degree of crystallinity is in the range of 1 to 85 %. What is meant by "amorphous" is a polymer having no crystalline phase detected by thermal analysis, such as DSC « Differential Scanning Calorimetry » and with X-ray diffraction.

By « thermoplastic polymer » is meant a polymer having a temperature above which the material is softening and melts without being degraded and which is hardening below such a temperature.

The determination of the melting temperature, Tm, of polymer A is in particular done at the peak of the melting endotherm as measured with DSC, with a Perkin Elmer Pyris 1 apparatus, by heating the polymer from 20°C at a 10°C/min rate. The vitreous transition temperature, Tg, of the polymer is taken at the medium point determined by using the tangential method by heating the polymer from 20°C at a 10°C/min rate.

The polymer A may comprise an amount of repeating units comprising at least one amide bond and/or at least one imide bond of at least 95 % relative to the total number of repeating units in the polymer A.

Thus in the instant specification homopolymer means a polymer comprising an amount of one repeating unit of at least 95 % relative to the total number of repeating units in the polymer A. On the other hand copolymer means a polymer comprising less than 95% of one repeating unit relative to the total number of repeating units in the polymer A.

Advantageously, the polymer A is thermoplastic. The polymer may be amorphous; in this case it may have a Tg ≤ 280°C. The polymer may also semi-crystalline, and may have a Tm of less or equal to 350°C.

The polymer comprises thus at least one alkyl-BHT diamine chosen from methyl-bis hexamethylene triamine, CAS 41318-22-3, ethyl-bis hexamethylene triamine, n-propyl-bis hexamethylene triamine and/or i-propyl-bis hexamethylene triamine. In particular, the polymer comprises only Me-BHT as alkyl-BHT. Alkyl-BHT corresponds to the following formula: 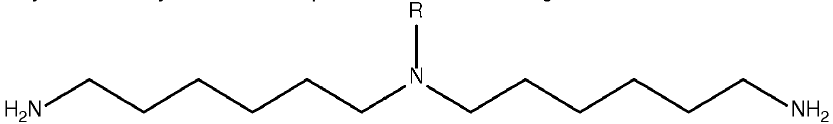 wherein R represents methyl, ethyl, n-propyl or i-propyl.

The amount of Alkyl-BHT, and in particular of Me-BHT, may be more or equal to 10 mol%, more or equal to 20 mol %, more or equal to 30 mol %, more or equal to 40 mol %, more or equal to 50 mol %, more or equal to 60 mol %, more or equal to 70 mol %, more or equal to 80 mol %, more or equal to 90 mol %, more or equal to 95 mol %, or may be 100 mol% relative to the total amount of diamine monomers in the polymer.

The amount of repetitive units comprising Alkyl-BHT, and in particular the amount of Me-BHT, may be more or equal to 10 mol%, more or equal to 20 mol %, more or equal to 30 mol %, more or equal to 40 mol %, more or equal to 50 mol %, more or equal to 60 mol %, more or equal to 70 mol %, more or equal to 80 mol %, more or equal to 90 mol %, more or equal to 95 mol %, or may be 100 mol% relative to the total amount of repetitive units in the polymer.

The amount of Alkyl-BHT, in particular the amount of Me-BHT, may be less than 100 mol%, in particular less than 99 mol%, and more particularly less than 98 mol%, or even less than 95 mol% relative to the total amount of diamine monomers in the polymer.

Alkyl-BHT may be synthesized according to the protocol as follows: Bishexamethylene triamine (BHT) (1.0 mmol) in methanol (10 mL) is protected on both the primary amino functional groups by reaction with ethyl trifluoroacetate (0.3 mL, 2.2 equiv) in methanol (10 mL), under anhydrous nitrogen, and the reaction mixture is stirred for 18 h at 20°C. The solvent is evaporated to dryness in vacuo. The residue is taken into the next step without purification.
Alkyl chloride or alkyl bromide or alkyl iodide (1.1 equiv) and triethylamine (1.25 equiv) is added to the diprotected compound solution in CH₂Cl₂ and methanol (1:1, v/v). The solution is stirred for 72 h at 20°C and then evaporated to dryness in vacuo. The residue is dissolved in CH₂Cl₂, and the solution is filtered and evaporated to dryness in vacuo. For the removal of the ditrifluoroacetyl protecting groups, alkylated compound (1 mmol) is dissolved in methanol (20 mL), the pH of the solution is increased by saturating with ammonia gas, then left for 18 h at 20°C and evaporated to dryness in vacuo.

Furthermore, Methyl-BHT may be obtained according to the method disclosed in the Example 2 of WO03018689.

The polymer A may also comprise at least one other diamine. This diamine may respond to the following formula H₂N-R-NH₂ wherein R is an aliphatic, an aromatic, an arylaliphatic or an alkylaromatic radical. In particular the diamine R radical, especially when free of heteroatom such as oxygen, comprises from 1 to 36 carbon atoms and more particularly from 4 to 14 carbon atoms.

By "arylaliphatic" is meant a radical comprising an aromatic cycle and which is linked to the main chain of the polymer by bonds on the aliphatic part, such as the radical meta-xylylene, for example deriving from meta-xylylene diamine.

By "alkylaromatic" is meant a radical substituted by alkyl radical(s) and which is linked to the main chain of the polymer by bonds on the aromatic part.

The radical R of the diamine may be free of heteroatom, or may comprise a heteroaom, such as oxygen, nitrogen, phosphorus or sulphur, in particular oxygen or sulphur, and more particularly oxygen. When a heteroatom is present it may:
- interrupt the chain of the radical, for example as an ether function,
- be in a functional group interrupting the chain of the radical, such as carbonyl or sulfone function, and/or
- be in a function grafted on the chain, such as a hydroxyl, sulfonic or sulfonate functions.

When the R radical is aliphatic it may be free of heteroatom. The aliphatic radical may be alicyclic or cycloaliphatic.

The diamines comprising an alicyclic aliphatic radical may comprise from 2 to 12 carbon atoms, they may be chosen from 1,2-diaminoethane, 1,3-diaminopropane, 1,3-diaminobutane, 1,4-diaminobutane, 1,5-diaminopentane, 1,6-diaminohexane or hexamethylene diamine (HMD), 2-methyl pentamethylene diamine, 2-methyl hexamethylene diamine, 3-methyl hexamethylene diamine, 2,5-dimethyl hexamethylene diamine, 2,2-dimethylpentamethylene diamine, 1,8-diaminooctane, methyl-1,8-diamino octane, in particular as the mixture of methyl-1,8-diamino octane and 1,9-diamino nonane sold by Kuraray, 1,9-diamino nonane, 5-methylnonane diamine, 1,10-diamino decane or decamethylenediamine, 1,12-diamino dodecane, or dodecamethylene diamine, 2,2,4-trimethyl hexamethylene diamine and/or 2,4,4-trimethyl hexamethylene diamine, and/or 2,2,7,7-tetramethyl octamethylene diamine.

The aliphatic radical R may be a cycloaliphatic radical, in particular mono- or dicyclic. Each cycle may comprise from 4 to 8 carbon atoms, more particularly the cycle comprise 4, 5 or 6 carbon atoms. The cycloaliphatic radical may be saturated or unsaturated, and may comprise one or two double bonds. The cycloaliphatic radical may comprise from 6 to 12 carbon atoms. Among the cycloaliphatic diamines may be cited 1,2-diaminocyclohexane, 1,3-diaminocyclohexane, 1,4-diaminocyclohexane, in particular trans stereoisomer, the 4,4'-methylenebis(cyclohexyl amine),
1,3-bis(aminomethyl)cyclohexane, 1,4-bis(aminomethyl)cyclohexane, diaminodicyclohexyl-methane, isophoronediamine, C36 diamine dimer, in particular the one sold by Croda under the name Priamine®, reference 1075, and 2,5-bis(aminomethyl)tetrahydrofuran, being cis, trans or a mixture of the stereoisomers.

The aliphatic radical R may also comprise at least one heteroatom, in particular oxygen. Among this type of radical may be cited polyether diamines such as Jeffamine® and Elastamine^{®}, from Huntsman, in particular having a molecular weight ranging from 100 to 5000 g/mol.

The diamine R radical may be aromatic, arylaliphatic or alkylaromatic, it may comprise from 6 to 24 carbon atoms, in particular from 6 to 18 carbon atoms and more particularly from 6 to 10 carbon atoms. It may be a mono- or di-cyclo compound, such as benzene or naphthalene.

The aromatic, arylaliphatic or alkylaromatic diamine may be chosen from diaminodiphenylmethane and its isomers, sulfonyldianiline and its isomers, 3,4'-oxydianiline also called 3,4'-diaminodiphenyl ether, 1,3-bis-(4-aminophenoxy)benzene, 1,3-bis-(3-aminophenoxy)benzene ; 4,4'-oxydianiline also called 4,4'-diaminodiphenyl ether, 1,4-diaminobenzene, 1,3-diaminobenzene, 1,2-diaminobenzene, 2,2'-bis(trifluoromethyl)benzidene, 4,4'-diaminobiphenyl; 4,4'-diaminodiphenyl sulphide, 9,9'-bis(4-amino)fluorene; 4,4'-diaminodiphenyl propane, 4,4'-diaminodiphenyl methane, benzidine, 3,3'-dichlorobenzidine, 3,3'-diaminodiphenyl sulfone, 4,4'-diaminodiphenyl sulfone, 1,5-diamino naphthalene, 4,4'-diaminodiphenyl diethylsilane, 4,4'-diamino diphenysilane, 4,4'-diaminodiphenyl ethyl phosphine oxide, 4,4'-diamino diphenyl N-methyl amine, 4,4'-diamino diphenyl N-phenyl amine, m-phenylene diamine, p-phenylene diamine, m-xylylenediamine, p-xylylendiamine, and 2,5-bis(aminomethyl)furan.

In particular the diamine is chosen from m-phenylene diamine, p-phenylene diamine, m-xylylenediamine, p-xylylenediamine, hexamethylenediamine, 2-methylpentamethylene-diamine, 1,10-diaminodecane, 1,12-diaminododecane, diaminodiphenylmethane and sulfonyldianiline.

In particular the polymer A comprises one alkyl-BHT, more specifically Me-BHT, and only one other diamine, in particular chosen from the ones cited above.

The polymer comprises at least one, in particular one or two, and more particularly one, polycarboxylic acid. The polycarboxylic acid may comprise from 2 to 44 carbon atoms. By polycarboxylic acid is meant a compound comprising at least two carboxylic acid functions. More specifically, the polycarboxylic acid is chosen among dicarboxylic acids, tricarboxylic acids, and tetracarboxylic acids.

The dicarboxylic acid may be an aliphatic diacid [acid (AL), herein after], in particular alicyclic, and more particularly chosen from oxalic acid (HOOC-COOH), malonic acid (HOOC-CH₂-COOH), succinic acid (HOOC-(CH₂)₂-COOH), glutaric acid (HOOC-(CH₂)₃-COOH), 2-methyl-glutaric acid (HOOC-CH(CH₃)-(CH₂)₂-COOH), 2,2-dimethyl-glutaric acid (HOOC-C(CH₃)₂-(CH₂)₂-COOH), adipic acid (HOOC-(CH₂)₄-COOH), 2,4,4-trimethyl-adipicacid (HOOC-CH(CH₃)-CH₂-C(CH₃)₂-CH₂-COOH), pimelic acid (HOOC-(CH₂)₅-COOH), suberic acid (HOOC-(CH₂)₆-COOH), azelaic acid (HOOC-(CH₂)₇-COOH), sebacic acid (HOOC-(CH₂)₈-COOH), undecanedioic acid (HOOC-(CH₂)₉-COOH), dodecanedioic acid (HOOC-(CH₂)₁₀-COOH), tridecanedioic acid (HOOC-(CH₂)₁₁-COOH), tetradecanedioic acid (HOOC-(CH₂)₁₂-COOH), pentadecanedioic acid (HOOC-(CH₂)₁₃-COOH), hexadecanedioic acid (HOOC-(CH₂)₁₄-COOH), octadecanedioic acid (HOOC-(CH₂)₁₆-COOH) and C36 fatty acid dimer, in particular the one known as Pripol® by Croda.

The dicarboxylic acid may be a cycloaliphatic dicarboxylic acid comprising at least one carbocyclic ring having from 4 to 8 carbon atoms in the ring, like e.g. cyclohexane dicarboxylic acids, in particular such as 1,2-cyclohexane carboxylic acid, 1,3-cyclohexane dicarboxylic acid and 1,4-cyclohexane dicarboxylic acid, 2,5-tetrahydrofurandicarboxylic acid, these acids may be cis, trans or mixtures thereof.

The dicarboxylic acid may be an aromatic diacid [acid (AR)], in particular chosen from isophthalic acid, terephthalic acid, orthophthalic acid, naphthalene dicarboxylic acid, more particularly 2,6-napthalene dicarboxylic acid, 2,7-napthalene dicarboxylic acid, 1,4-napthalene dicarboxylic acid, 2,3-napthalene dicarboxylic acid, 1,8-napthalene dicarboxylic acid, and 1,2-napthalene dicarboxylic acid, 2,5-pyridine dicarboxylic acid, 2,4-pyridine dicarboxylic acid, 3,5-pyridine dicarboxylic acid, 2,2-bis-(4-carboxyphenyl)propane, bis(4-carboxyphenyl)methane, 2,2-bis-(4-carboxyphenyl)hexafluoropropane, 2,2-bis-(4-carboxyphenyl)ketone, 4,4'-bis(4-carboxyphenyl)sulfone, 2,2-bis(3-carboxyphenyl)propane, bis(3-carboxyphenyl)methane, 2,2-bis-(3-carboxyphenyl)hexafluoropropane, 2,2-bis-(3-carboxyphenyl)ketone, bis(3-carboxyphenyl)methane and 4,4'-biphenyl dicarboxylic acid, 2-hydroxyterephthalic acid, 5-hydroxyisophthalic acid, 4-hydroxyisophthalic acid, 2,5-dihydroxyterephthalic acid, sodium 5-sulfoisophthalate, or AISNa, lithium 5-sulfoisophthalate, or AISLi, potassium 5-sulfoisophthalate, or AISK, and 2,5-furandicarboxylic acid.

In particular the aromatic dicarboxylic acid is chosen from isophthalic acid, terephthalic acid and orthophthalic acid.

The tricarboxylic acid may have two carboxylic acids which are able to form an intramolecular anhydride, in particular chosen from trimellitic acid, tricarballylic acid, acotinic acid, and 1,2,4 butane tricarboxylic acid.

The tetracarboxylic acids may in particular have carboxylic acids which are able to form one intramolecular anhydride, and more particularly they may be able to form two intramolecular anhydrides.

The tetracarboxylic acid may be aliphatic, aromatic, alkylaromatic or arylaliphatic tetracarboxylic acid. In particular it may be chosen from butane-1,2,3,4-tetracarboxylic acid, ethane-1,1,2,2-tetracarboxylic acid, pentane-1,2,4,5-tetracarboxylic acid, cyclobutane-1,2,3,4-tetracarboxylic acid, cyclopentane-1,2,3,4-tetracarboxylic acid, cyclohexane-1,2,4,5-tetracarboxylic acid, cyclohexane-2,3,5,6-tetracarboxylic acid, ethyl-3-cyclohexane-3-(1,2)5,6-tetracarboxylic acid, 1-methyl-3-ethyl-cyclohexane-3-(1,2)5,6-tetracarboxylic acid, 1-ethyl-cyclohexane-1-(1,2),3,4-tetracarboxylic acid, 1-propyl-cyclohexane-1-(2,3),3,4-tetracarboxylic acid, 1,3-dipropylcyclohexane-1-(2,3),3-(2,3)-tetracarboxylic acid, dicyclohexyl-3,4,3',4'-tetracarboxylic acid, tetrahydrofuran-2,3,4,5- tetracarboxylic acid, pyromellitic acid, 3,3',4,4'-biphenyltetracarboxylic acid, 2,3,3',4'-biphenyltetracarboxylic acid, 2,2',3,3'-biphenyltetracarboxylic acid, 3,3',4,4'-benzophenonetetracarboxylic acid, 2,2',3,3'-benzophenone-tetracarboxylic acid, 1,2,5,6-naphtalene-tetracarboxylic acid, 2,3,6,7-naphtalene-tetracarboxylic acid, 2,3,5,6-pyridine-tetracarboxylic acid, 3,4,9,10-perylenetetracarboxylic acid, 3,3',4,4'-tetraphenylsilane-tetracarboxylic acid, 2,2'-bis-(3,4-bicarboxyphenyl) hexafluoropropane tetracarboxylic acid, 4,4'-oxydiphtalic acid, 2,2-bis(3,4-dicarboxyphenol) sulfone acid, 4,4'-(hexafluoroisopropylidene)diphthalic, 3,4,9,10-perylenetetracarboxylic acid, 3,3',4,4'-diphenylsulfone tetracarboxylic acid, 2,3,6,7-naphtalene tetracarboxylic acid, ethyleneglycol bistrimellitic acid, hydroquinonediphthalic acid, 2,2-bis(3,4-dicarboxyphenyl) propane, 1,1-bis(2,3-dicarboxyphenyl) ethane, 1,1-bis(3,4-dicarboxyphenyl) ethane, bis(2,3-dicarboxyphenyl) methane, bis(3,4-dicarboxyphenyl) methane, bis(3,4-dicarboxyphenyl) sulfoxide, pyrazine-2,3,5,6-tetracarboxylic acid, thiophene-2,3,4,5-tetracarboxylic acid, 1,8,9,10-phenanthrene tetracarboxylic acid and their mixtures.

In particular, the tetracarboxylic acid is chosen from pyromellitic acid, 3,3',4,4'-biphenyltetracarboxylic acid, 4,4'-oxydiphthalic acid, 3,3',4,4'-benzophenonetetracarboxylic acid, 2,2',3,3'-benzophenone-tetracarboxylic acid, ethane-1,1,2,2 tetracarboxylic acid, butane-1,2,3,4-tetracarboxylic acid and their mixtures, more particularly the tetracarboxylic acid is pyromellitic acid.

Alternatively equivalents of tetracarboxylic acids may be used, such as dianhydrides, or esters obtained from dianhydrides or tetracarboxylic acids with a mono-alcohol such as methanol, ethanol or propanol or butanol. They may be monoesters, diesters, triesters or tetraesters, in particular they may be diesters.

The polymer A may also comprise amino-acid repeating units. These repeating units may arise from lactams or amino-acids, in particular chosen from caprolactam, 6-aminohexanoic acid, 10-aminodecanoic acid, 11-aminoundecanoic acid, and 12-dodecanolactam.

The amount of repeating units arising from lactams or amino-acids may range from 0.1 to 50 mol%, in particular from 0.1 to 10 mol%, and more particularly from 0.1 to 5 mol% relative to the total amount of repeating units in the polymer.

According to a preferred embodiment, the polymer A is a polyamide [polyamide (A1)] comprising recurring units derived from:
(i-1) a dicarboxylic acid component [acid component (AA)], wherein said acid component (AA) comprises at least one long chain aliphatic dicarboxylic acid or derivative thereof [acid (AL_{long})], said acid (AL_{long}) having at least 8 carbon atoms, and, optionally, at least one diacid different from said acid (AL_{long}); and
(i-2) a diamine component [amine component (NN)] comprising at least one alkyl-BHT diamine selected from the group consisting of methyl-bis hexamethylene triamine, ethyl-bis hexamethylene triamine, n-propyl-bis hexamethylene triamine and i-propyl-bis hexamethylene triamine, and, optionally, at least one amine different from alkyl-BHT diamine, and optionally recurring units derived from at least one of lactams and amino-acids.

The polyamide (A1) preferably comprises recurring units derived from:
(i-1') an acid component (AA) comprising at least one acid (AL_{long}) selected from the group consisting of suberic acid [HOOC-(CH₂)₆-COOH], azelaic acid [HOOC-(CH₂)₇-COOH], sebacic acid [HOOC-(CH₂)₈-COOH], undecanedioic acid [HOOC-(CH₂)₉-COOH], dodecandioic acid [HOOC-(CH₂)₁₀-COOH], tetradecandioic acid [HOOC-(CH₂)₁₁-COOH], pentadecanedioic acid [HOOC-(CH₂)₁₃-COOH], hexanedecanedioic acid [HOOC-(CH₂)₁₄-COOH], andoctanedecanedioic acid [HOOC-(CH₂)₁₆-COOH], and, optionally, at least one diacid different from said acid (AL_{long}); and
(i-2) an amine component (NN) comprising methyl-bis hexamethylene triamine, and, optionally, at least one amine different from said methyl-bis hexamethylene triamine, and
   optionally recurring units derived from at least one of lactams and amino-acids.

According to another embodiment, the polymer A is a homopolyamide, in particular an aliphatic homopolyamide, obtained through polymerisation of one alkyl-BHT diamine, and in particular Me-BHT, with a dicarboxylic acid comprising at least 8 carbon atoms.

The homopolyamide A may be a semi-aromatic homopolyamide, in particular with the diamine being Me-BHT, more particularly this homopolyamide
∘ comprises mono-functionnal compounds and/or polyfunctionnal compounds,
∘ exhibits AEG and/or CEG values which are less than or equal to 100 meq/kg,
∘ comprises a dicarboxylic acid which is not terephthalic acid, isophthalic acid or 1,6-naphtalic acid,
∘ has a number average molecular weight of at least 10 000 g/mol, in particular at least 12 000 g/mol determined by Size Exclusion Chromatography, and/or
∘ has a polydispersity ranging from 1.5 to 5 determined by Size Exclusion Chromatography.

By "determined by Size Exclusion Chromatography" is meant a determination such as disclosed in the Examples.

The homopolyamide A, in particular when aliphatic, comprising a dicarboxylic acid comprising at least 8 carbon atoms may exhibit a good flexibility with a good to moderate water reuptake. Having an important water reuptake may be, at least in some applications, a negative point.

For instance in some applications, such as in mobile electronics, production of flexible hoses or car body panels, dimensional stability under humid conditions is useful, or even required. This means that a big water reuptake, for example higher than the one of PA 66 at the relative humidity considered in the use, is disadvantageous, or even prohibited.

According to another embodiment, the polymer is a co-polyamide A obtained through polymerisation of at least three, in particular of only three, different monomers chosen from diamines and dicarboxylic acids, with at least
- one alkyl-BHT diamine, in particular Me-BHT, and
- one dicarboxylic acid.

For example the copolyamide A comprises at least three monomers, in particular only three monomers:
- one monomer being an alkyl-BHT, in particular Me-BHT,
- one monomer being a dicarboxylic acid,
- at least another monomer being chosen from alkyl-BHT, diamines, amino acids, lactams, and dicarboxylic acids.

In particular the co-polyamide A comprises, in particular consists of:
- one monomer being an alkyl-BHT, in particular Me-BHT,
- one monomer being an aliphatic dicarboxylic diacids and
- one monomer being an aromatic, arylaliphatic or alkylalaromatic dicarboxylic acid,
more particularly the mol ratio aliphatic dicarboxylic acid / aromatic dicarboxylic acid is ranging from 5:95 to 95:5, and even more particularly from 30:70 to 70:30.

In particular the co-polyamide A comprises, more particularly consists of:
- one monomer being an alkyl-BHT, in particular Me-BHT,
- one monomer being an aromatic, arylaliphatic or alkylaromatic dicarboxylic acid and,
- one monomer being an aliphatic diamine, more particularly the mol ratio aliphatic diamine / alkyl-BHT acid is ranging from 5:95 to 95:5, and even more particularly from 30:70 to 70:30

As disclosed herein, the polymer A is a polyimide comprising at least one monomer, in particular one monomer, chosen from the alkyl-BHT, and at least one monomer, in particular one monomer, chosen from tetracarboxylic acids able to form 2 intramolecular anhydride functions. In particular the tetracarboxylic acid is chosen from pyromellitic acid,
3,3',4,4'-biphenyltetracarboxylic acid, 4,4'-oxydiphthalic acid, 3,3',4,4'-benzophenonetetracarboxylic acid, 2,2',3,3'-benzophenone-tetracarboxylic acid, ethane-1,1,2,2 tetracarboxylic acid, butane-1,2,3,4-tetracarboxylic acid and their mixtures, and even more particularly the tetracarboxylic acid is pyromellitic acid.

The polyimide may be a homopolyimide obtained through polymerisation of one alkyl-BHT diamine, in particular Me-BHT, with one tetracarboxylic acid able to form 2 intramolecular anhydride functions. In particular the tetracarboxylic acid is chosen from pyromellitic acid, 3,3',4,4'-biphenyltetracarboxylic acid, 4,4'-oxydiphthalic acid, 3,3',4,4'-benzophenonetetracarboxylic acid, 2,2',3,3'-benzophenone-tetracarboxylic acid, ethane-1,1,2,2 tetracarboxylic acid, butane-1,2,3,4-tetracarboxylic acid and their mixtures, and even more particularly the tetracarboxylic acid is pyromellitic acid. As disclosed herein, the polyimide may be a co-polyimide obtained through polymerisation of at least three monomers, in particular only three monomers, chosen from diamines and tetracarboxylic acids, with at least
- one alkyl-BHT diamine, and in particular Me-BHT,
- one tetracarboxylic acid.

In particular the co-polyimide comprises only three different monomers.

For example the co-polyimide comprises at least three monomers, or consists of three monomers:
- one monomer being an alkyl-BHT, in particular Me-BHT,
- one monomer being a tetracarboxylic acid,
- at least another monomer being chosen from alkyl-BHT, diamines, and tetracarboxylic acids.

As disclosed herein the polymer may be a co-polyamideimide obtained through polymerisation of at least:
- one alkyl-BHT diamine, in particular Me-BHT,
- one tri-carboxylic acid or one dicarboxylic acid and one tetracarboxylic acid, in particular the co-polyamideimide comprises
   - two monomers, one being an alkyl-BHT diamine, and more particularly Me-BHT, and one being a tri-carboxylic acid or
   - three monomers, one being an alkyl-BHT diamine, and more particularly Me-BHT, another one being a dicarboxylic acid and another one being a tetracarboxylic acid.

For example the co-polyamideimide comprises:
- at least two monomers:
   - one alkyl-BHT diamine, in particular Me-BHT, and
   - one tri-carboxylic acid, or
- at least three monomers :
   - one alkyl-BHT diamine, in particular Me-BHT,
   - one dicarboxylic acid, and
   - one tetracarboxylic acid.

In particular the co-polyamideimide consists of:
- one alkyl-BHT diamine, in particular Me-BHT, and one tri-carboxylic acid, or
- one alkyl-BHT diamine, in particular Me-BHT, one dicarboxylic acid, and one tetracarboxylic acid.

The molar ratio dicarboxylic acid / tetracarboxylic acid may range from 5:95 to 95:5.

In addition, the polymer A may also comprise at least one, in particular one, mono-functional compound, such compounds may be chosen from monoamines, monoanhydrides, monoacids or nazi diacids such as they are able to from an intramolecular anhydride function, among chain limiters may be cited phthalic anhydride, 1-aminopentane, 1-aminohexane, 1-aminoheptane, 1-aminooctane, 1-aminononane, 1-aminodecane, 1-aminoundecane, 1-aminododecane, benzylamine, ortho-phthalic acid, or 1,2-benzenedicarboxylic acid, acetic acid, propionic acid, benzoic acid, stearic acid or their mixtures.

The polymer may also comprise branching agents, i.e. poly-functionnal compounds, molecules having at least three functionalities able to react with amine and/or carboxylic acid functions, for example tri- or tetra-carboxylic acid unable to form intramolecular anhydride, in particular such as 2,2,6,6-tetrakis(β-carboxyethyl)cyclohexanone and trimesic acid.

The polymer may comprise mono- and/or poly-functional compounds in an amount ranging from 15 to 200 mmol/kg, in particular from 30 to 100 mmol/kg.

The number average molecular weight of the polymer A may be controlled by the following means:
- by using chain limiter(s), i.e. mono-functional compounds, in particular such as defined above,
- by a stoechiometric desequilibrium r=[poly carboxylic acid]/[diamine], wherein r may range from 0.8 to 1.2, preferentially from 0.9 to 1.1, more preferentially from 0.95 to 1.05, even more preferentially from 0.99 to 1.01.
- by using branching agents, for example such as defined above,
- by adjusting the synthesis parameters, such as the reaction time, temperature, humidity, or pressure, or
- by a combination of this different means.

The polymer may exhibit AEG and/or CEG values which are less than or equal to 100 meq/kg. AEG and CEG may be measured by an acido-basic titration after solubilisation of the polymer in a solvent.

The number average molecular weight of the polymer may be of at least 10 000 g/mol, in particular at least 12 000 g/mol, and more particularly at least 15 000 g/mol measured by Size Exclusion Chromatography. This number average molecular weight defined above refers to absolute number average molecular weight (not Polystyrene or PMMA equivalent) and is measured as defined in the Examples.

The polymer may have a polydispersity ranging from 1.5 to 5.

It is possible to do a polymerisation in a solution (also called solvent way), in particular following the classic ways of synthesising polyimide in solvent, for example in two steps through the polyamic acid (PAM). It is also possible to do a molten polymerisation or a solid state polymerisation from mixtures of monomers or from their salts.

The polyamide may be obtained from polymerization medium which can, for example, be an aqueous solution comprising the monomers or a liquid comprising the monomers. Advantageously, the polymerization medium comprises water as solvent. This facilitates the stirring of the medium and thus its homogeneity. The polymerization medium can also comprise additives, such as chain-limiting agents. The polyamide is generally obtained by polycondensation between the various monomers, present in all or in part, in order to form polyamide chains, with formation of the elimination product, in particular water, a portion of which may be vaporized. The polyamide is generally obtained by heating, at high temperature and high pressure, for example an aqueous solution comprising the monomers or a liquid comprising the monomers, in order to evaporate the elimination product, in particular the water, present initially in the polymerization medium and/or formed during the polycondensation, while preventing any formation of solid phase in order to prevent the mixture from setting solid.

The polycondensation reaction may be carried out at a pressure of approximately 0.5 to 3.5 MPa, in particular 0.5 to 2.5 MPa, at a temperature of approximately 100 to 320° C, in particular 180 to 300°C, even more particularly a temperature above 240°C. The polycondensation may be continued in the molten phase at atmospheric or reduced pressure, so as to achieve the desired degree of progression.

The polycondensation product is a molten polymer or prepolymer. It can comprise a vapour phase essentially composed of vapour of the elimination product, in particular of water, capable of having been formed and/or vaporized.

This product can be subjected to stages of separation of vapour phase and of finishing in order achieving the desired degree of polycondensation. The separation of the vapour phase can, for example, be carried out in a device of cyclone type. Such devices are known.

The finishing consists in keeping the polycondensation product in the molten state, under a pressure in the vicinity of atmospheric pressure or under reduced pressure, for a time sufficient to achieve the desired degree of progression. Such an operation is known to a person skilled in the art. The temperature of the finishing stage is advantageously greater than or equal to 100° C, and in all cases greater than the temperature at which the polymer solidifies. The residence time in the finishing device is preferably greater than or equal to 5 minutes.

The polycondensation product can also be subjected to a solid-phase postcondensation stage. This stage is known to a person skilled in the art and makes it possible to increase the degree of polycondensation to a desired value.

The process may be similar in its conditions to the conventional process for the preparation of polyamide of the type of those obtained from dicarboxylic acids and diamines, in particular to the process for the manufacture of polyamide 6.6 from adipic acid and hexamethylenediamine. This process for the manufacture of polyamide 6.6 is known to a person skilled in the art. The process for the manufacture of polyamide of the type of those obtained from dicarboxylic acids and diamines generally uses, as starting material, a salt obtained by mixing a diacid with a diamine in a stoichiometric amount, generally in a solvent, such as water. Thus, in the manufacture of poly(hexamethylene adipamide), the adipic acid is mixed with hexamethylenediamine, generally in water, in order to obtain hexamethylenediammonium adipate, better known under the name of Nylon salt or "N Salt".

The process for preparing the polymer A may be continuous or may be done batchwise.

The invention also relates to a composition comprising:
- at least 20 % by weight of a polymer A, chosen from polyamide, polyimide and polyamideimide, obtained through polymerisation of at least one alkyl-BHT diamine chosen from methyl-bis hexamethylene triamine, ethyl-bis hexamethylene triamine, n-propyl-bis hexamethylene triamine and/or i-propyl-bis hexamethylene triamine, the amount of alkyl BHT diamine being more than 1 mol% relative to the total mole amount of diamine monomers in the polymer, and at least one polycarboxylic acid, chosen from aliphatic polycarboxylic acids, aryl polycarboxylic acids, alkylaryl polycarboxylic acids and arylalkyl polycarboxylic acids,
- optionally phosphorous acid, and
- at least 0.1 % by weight of additional compound(s),
wherein the % by weight are based on the total weight of the composition.

The composition may comprise an amount of polymer A of at least 30 wt%, in particular at least 40 wt% based on the total weight of the composition. According to an embodiment, the composition may comprise at least two different polymers A.

The composition, in particular when the polymer A is a homo-polyamide, may comprise an at least one other polymer B, in particular this polymer B may be chosen from the group consisting of polyamide, polycarbonate, polyolefin, polysulfone, polyamideimide and polyester.

More particularly the polymer B is a polyamide chosen among:
- aliphatic polyamide, such as PA 6.6, PA 6.10, PA 6.12, PA 10.10, PA10.12, PA 10.6, PA 12.12, PA 4.6, PA 9.2, PA 10.2, PA 6, PA 7, PA 11, PA 12, PA 13
- semi aromatic polyamide
   - comprising aromatic diacids, such as terephthalic acid, isophthalic acid and orthophthalic acid, more particularly polyphthalamide, for example as 6T, 9T, 10T, 11T, 12T, 6I,
   - comprising arylaliphatic diamine(s), in particular meta-xylylene diamine, more particularly MXD6,
- their copolymers, in particular such as PA 6T/6I, PA 6T/66, PA 66/6T, 6/66, PA 6/11, PA 6/12, and PA 11 /12 and
- their mixtures.

The polyphthalamide may in particular be those known as AMODEL^{®}. The semi-aromatic polyamide comprising diamine(s) having an aromatic ring may be the ones known as IXEF^{®}.

More particularly the composition may comprise an amount of polyester of less than 50 % by weight, an amount of polycarbonate of less than 50 % by weight, an amount of polyolefin of less than 50 % by weight, an amount of polyether of less than 50 % by weight or an amount of their combinations of less than 50 % by weight, relative to the total weight of the composition.

In particular the weight ratios polyester/polymer A, polycarbonate/polymer A, polyolefin/polymer A, and/or polyether/polymer A are less than 0.5, especially when polymer A is an homo-polyamide.

In addition to the polymer A, in particular when polymer A is a co-polyamide, a homo-polyimide, a co-polyamide or a co-polyamideimide, the composition can comprise, one or more other polymers, in particular polyamides or copolyamides.

In particular when the composition comprises a polyamide other than the polyamide A, the amount of polyamide A is more than 30 wt%, in particular more than 40 wt%, and more particularly more than 50 wt% relative to the total weight of polyamide in the composition.

In particular, the composition comprises an amount of polyamide other than the polyamide A is less than 50 wt% compared to the total weight of the composition.

At least one of reinforcing or bulking fillers is conventionally used for the production of polyamide compositions. Mention may in particular be made of reinforcing fibrous fillers, such as glass fibers, carbon fibers or organic fibers, non-fibrous fillers such as particulate or lamellar fillers and/or exfoliable or non-exfoliable nanofillers, for instance alumina, carbon black, clays, zirconium phosphate, kaolin, calcium carbonate, copper, diatomaceous earths, graphite, mica, silica, titanium dioxide, zeolites, talc, wollastonite, polymeric fillers, such as, for example, dimethacrylate particles, glass beads or glass powder.

According to one embodiment, reinforcing fibers, such as glass fibers, are used. Preferentially, the fiber most widely used is glass fiber, of "chopped" type, having a diameter between 7 and 14 µm and a length of less than 5 mm. These fillers may have a surface size that ensures mechanical adhesion between the fibers and the polyamide matrix. In particular the glass fibers are E-glass fibers, S-glass fibers, T-glass fibers and/or flat glass fibers.

The composition according to the invention can comprise from 0.1 to 70% by weight of reinforcing or bulking fillers, in particular from 1 to 60 % by weight, and more particularly from 10 to 50% by weight, relative to the total weight of the composition.

The composition may comprise at least one impact modifier, in particular from 0.1 to 30 % by weight, in particular from 1 to 25 % by weight and more particularly from 5 to 20 % by weight relative to the total weight of the composition.

The composition according to the invention may comprise at least one impact modifier, that is to say a compound capable of modifying the impact strength of a polyamide composition. These impact modifiers preferentially comprise functional groups which react with the polyamide.

According to the invention, the term "functional groups which react with the polyamide" means groups capable of reacting or of interacting chemically with the acid or amine functions of the polyamide, in particular by covalency, ionic or hydrogen bond interaction or van der Waals bonding. Such reactive groups make it possible to ensure good dispersing of the impact modifiers in the polyamide matrix. Good dispersing is generally obtained with impact modifier particles having a mean size of between 0.1 and 2 µm in the matrix.

Use is preferentially made of impact modifiers comprising functional groups that react with the polyamide as a function of the acid or amine nature of the imbalance ΔEG=CEG-AEG (concentration of acid end groups CEG minus concentration of amine end groups AEG) of the polyamide. Thus, for example, if the ΔEG is "acid" (CEG>AEG), use will preferentially be made of reactive functional groups capable of reacting or of interacting chemically with the acid functions of the polyamide, in particular by covalency, ionic or hydrogen bond interaction or van der Waals bonding. If, for example, the ΔEG is "amine" (AEG>CEG), use will preferably be made of reactive functional groups capable of reacting or of interacting chemically with the amine functions of the polyamide, in particular by covalency, ionic or hydrogen bond interaction or van der Waals bonding. Use is preferentially made of impact modifiers having functional groups which react with the polyamide exhibiting a ΔEG of "amine" nature.

The impact modifiers can very well comprise in themselves functional groups which react with the polyamide, for example as regards ethylene/acrylic acid (EAA).

It is also possible to add thereto functional groups which react with the polyamide, generally by grafting or copolymerization, for example for ethylene/propylene/diene (EPDM) grafted with maleic anhydride.

Use may be made, according to the invention, of impact modifiers which are oligomeric or polymeric compounds comprising at least one of the following monomers or a mixture thereof: ethylene, propylene, butene, isoprene, diene, acrylate, butadiene, styrene, octene, acrylonitrile, acrylic acid, methacrylic acid, vinyl acetate, vinyl esters, such as acrylic and methacrylic esters and glycidyl methacrylate. These compounds according to the invention can also comprise, in addition, monomers other than those mentioned above.

The base of the impact modifier compound, optionally known as elastomer base, can be selected from the group consisting of: polyethylenes, polypropylenes, polybutenes, polyisoprenes, ethylene/propylene rubbers (EPR), ethylene/propylene/diene (EPDM) rubbers, ethylene and butene rubbers, ethylene and acrylate rubbers, butadiene and styrene rubbers, butadiene and acrylate rubbers, ethylene and octene rubbers, butadiene and acrylonitrile rubbers, ethylene/acrylic acid (EAA) products, ethylene/vinyl acetate (EVA) products, ethylene/acrylic ester (EAE) products, acrylonitrile/butadiene/styrene (ABS) copolymers, styrene/ethylene/butadiene/styrene (SEBS) block copolymers, styrene/butadiene/styrene (SBS) copolymers, core/shell elastomers of methacrylate/butadiene/styrene (MBS) type, or blends of at least two elastomers listed above.

In addition to the groups listed above, these impact modifiers can also comprise, generally grafted or copolymerized, functional groups which react with the polyamide, such as, in particular, the following functional groups: acids, such as carboxylic acids, salified acids, esters in particular, acrylates and methacrylates, ionomers, glycidyl groups, in particular epoxy groups, glycidyl esters, anhydrides, in particular maleic anhydrides, oxazolines, maleimides or their mixtures.

Such functional groups on the elastomers are, for example, obtained by use of a comonomer during the preparation of the elastomer.

Mention may in particular be made, as impact modifiers comprising functional groups which react with the polyamide, of terpolymers of ethylene, acrylic ester and glycidyl methacrylate, copolymers of ethylene and of butyl ester acrylate, copolymers of ethylene, n-butyl acrylate and glycidyl methacrylate, copolymers of ethylene and of maleic anhydride, ethylene/propylene/diene copolymers grafted with maleic anhydride, styrene/maleimide copolymers grafted with maleic anhydride, styrene/ethylene/butylene/styrene copolymers modified with maleic anhydrides, styrene/acrylonitrile copolymers grafted with maleic anhydrides, acrylonitrile/butadiene/styrene copolymers grafted with maleic anhydride, and hydrogenated versions thereof.

The composition may comprise a heat stabilizers such as polyhydric alcohol comprising from 2 to 8 hydroxyl groups; CuI and KI pairing, CuO and KBr, Cu₂O and KBr, hindered phenolic compounds, stabilizers having at least one hindered amine unit of HALS type, or organic or inorganic phosphorus-containing stabilizers, such as sodium hypophosphite or manganese hypophosphite.

The polyhydric alcohol may be chosen from diglycerol, triglycerol, pentaerythritol, dipentaerythritol, tripentaerythritol or di-trimethylolpropane. More preferentially, the polyhydric alcohol used is dipentaerythritol and/or tripentaerythritol. Polyhydric alcohols may be free or they may be linked to the polyamide.

The composition may comprise an amount of heat stabilizers ranging from 0.1 to 5 wt%, in particular from 0.5 to 3 wt% relative to the total weight of the composition

The composition according to the invention can also comprise additives normally used in the production of polyamide compositions. Thus, mention may be made of lubricants, flame retardants, plasticizers, nucleating agents, catalysts, antioxidants, antistatic agents, colorants, mattifying agents, molding aids or other conventional additives.

The lubricants may be chosen from paraffin, fatty acids, such as stearic acid, fatty acid salts, such as stearate, in particular the metal salts, for example aluminium stearate, ethylene bis stearamide, also abbreviated as EBS, pentaerythritol ester, in particular the lubricant may be a mixture of paraffin, fatty acid and fatty acid metal salt and may be present in an amount ranging from 0.1 to 15 wt%, in particular from 1 to 5 wt% relative to the total weight of the composition.

The plasticizers may be chosen from benzenesulfonamide derivatives, such as n-butyl-benzenesulfonamide (BBSA), ethyltoluenesulfonamide or N-cyclohexyltoluenesulfonamide; hydroxybenzoic acid esters, such as 2-ethylhexyl para-hydroxybenzoate and 2-hexyldecyl para-hydroxybenzoate, tetrahydrofurfuryl alcohol esters or ethers and citric acid or hydroxymalonic acid esters Plasticizer(s) may be present in an amount ranging from 0.1 to 15 wt%, in particular from 1 to 5 wt% relative to the total weight of the composition.

These fillers and additives can be added to the modified polyamide by normal means suited to each filler or additive, such as, for example, during the polymerization or in the melt blending.

The compositions may be obtained by mixing the different ingredients, fillers and/or additives. The processing temperature may be adjusted to the melting temperature of the polymer having the higher melting temperature. The compounds may be introduced simultaneously or sequentially. In general an extruder is used in which the material is heated, then melted and subjected to a shearing strength to mix the different compounds. According to specific embodiments, it is possible to use a masterbatch, in a molten state or not, before preparing the final composition. For example it is possible to prepare a masterbatch by mixing the resin and other ingredients.

In particular the composition may be obtained by a hot mixing of the different ingerdients, for example in a mono- or twin-screw extruder, at a temperature allowing to keep the polymer, such as the polyamide or the polyimide, in a molten state ; or by a cold mixing, for example in a mechanical stirrer. The composition is preferentially obtained through mixture of the components in a molten state. Generally, the obtained mixture is extruded as rods which are chopped into pieces to give pellets. The compounds may be added at any time of the preparation of the plastic material, in particular by hot or cold mixing with the plastic matrix. The addition of the compounds and of the additives may be done by adding these compounds in the molten plastic matrix as pure compounds or as concentrated mixtures in a matrix such as a plastic matrix.

The invention also concerns a method for preparing a composition comprising polymers according to the invention, by mixing the polymer, under a molten state or not, with reinforcing or bulking filler(s), impact modifying agents and/or additives.

According to another way, one or several additives may be present on the surface of the composition, in particular on the surface of granules of the composition.

The invention also concerns a shaped article comprising a composition comprising or consisting of a polymer A chosen from polyamide, polyimide and polyamideimide,
said polymer A being obtained through polymerisation of at least:
a. one or several alkyl-BHT diamine chosen from methyl-bis hexamethylene triamine, ethyl-bis hexamethylene triamine, n-propyl-bis hexamethylene triamine and/or i-propyl-bis hexamethylene triamine, and
b. one or several polycarboxylic acid, chosen from aliphatic polycarboxylic acids, aryl polycarboxylic acids, alkylaryl polycarboxylic acids and arylalkyl polycarboxylic acids,
said polymer comprising a minimum amount of alkyl-BHT diamine of 1 mol% relative to the total mole amount of diamine monomers comprised in the polymer.

The shaped article may be a pellet, a granule, a rod, a bar, a complex structure obtained by injection molding or laser sintering, a tubing, a tank, a pipe, a hollow body, fibers, yarns, films, sheets, or a substrate, in particular a metallic substrate, coated by the composition.

The article may be shaped according to the means known for shaping thermoplastic polymers.

The shaped article may be produced with a very good reproducibility, for example with a weight variation of the article of less than 15 % compared to an average of 100 randomly taken shaped articles.

The shaped article may be obtained through moulding, either injection moulding, blow moulding, water moulding, extrusion, extrusion moulding, pelletizing, and underwater pelletizing.

In particular, the shaped article is flexible. The expression "flexible article" may be understood, within the meaning of the invention, to mean articles, in particular bars, in dry state, for example less than 0.2 wt% of water, having an elastic modulus E' of less than 1000 MPa, as measured according to the protocol defined in the Examples.

The invention also concerns a method for obtaining a shaped article or a powder comprising the following steps:
a) heating a composition comprising at least 20 % by weight of one or more polymer chosen from a polyamide or a polyimide obtained through polymerisation of at least:
   a. one or several alkyl-BHT diamine chosen from methyl-bis hexamethylene triamine, ethyl-bis hexamethylene triamine, n-propyl-bis hexamethylene triamine and/or i-propyl-bis hexamethylene triamine, and
   b. one or several polycarboxylic acid, chosen from aliphatic polycarboxylic acids, aryl polycarboxylic acids, alkylaryl polycarboxylic acids and arylalkyl polycarboxylic acids,
   said polymer comprising anamount of alkyl-BHT diamine of at least 1 mol% relative to the total mole amount of diamine monomers comprised in the polymer
b) shaping the heated composition or coating a substrate, or obtaining pellets of the composition and
c) recovering the article or the powder.

The powder may thus be obtained through grinding of pellets of the composition.

Should the disclosure of any patents, patent applications, and publications conflict with the description of the present application to the extent that it may render a term unclear, the present description shall take precedence.

### Examples

### Characterisations

Viscosity Index (IV): measured according to standard ISO EN 307, at 25°C after dissolution of the polyamide at 5g/L in an aqueous solution of formic acid at 90%.

The melting temperature (Tₘ) and associate enthalpy (ΔHf), crystallization temperature on cooling (Tc): determined by differential scanning calorimetry (DSC) using a Perkin Elmer Pyris 1 device, at a rate of 10° C/min after erasing of the thermal history at 300°C for 5 min. Glass transition temperature (Tg) determined on the same device at a rate of 10°C/min, and if Tg is not visible in these conditions, the it is determined at 40°C/min.

The thermomechanical properties (elastic modulus E' and loss modulus E" function of the temperature) are determined on injection moulded test specimen on a TA Instruments RSA3 apparatus by carrying out 3 point flexures applying a frequency of 1 Hz and an amplitude 0.05% The measurements are performed following a temperature gradient from -100°C to 100°C at a temperature increase speed of 2°C/min.

The Size Exclusion Chromatography for measuring absolute molecular weights is performed in dichloromethane / trifluoroacetic anhydride 95:5 v:v as a solvent at 30°C, followed by three-fold detection by refractometry RI, UV absorption and viscosimetry. A truncation at 2000 g/mol is used.

### Example 1: PA MeBHT10

In a polymerisation reactor are introduced 77.543 g of N-(6-aminohexyl)-N-methyl-1,6-hexanediamine (also called MeBHT, RN CAS : 41318-22-3) at 97.2% (i.e. 0,329 mol), 66.799 g of sebacic acid at 99.5% (i.e. 0.329 mol), 127 g of water and 2 g of an antifoam agent Silcolapse 5020. The reaction medium is polymerised according to classic method of PA 66 type, heating the reaction medium allowing to concentrate the monomers aqueous solution at atmospheric pressure to 70 %, then distilling under a pressure of 17.5 absolute bars until the temperature of the reaction medium reaches 250°C, then lowering the pressure to atmospheric pressure in 36 minutes while heating to 272°C and finally proceeding with a finishing step by maintaining the reaction medium at 272°C for 30 minutes at atmospheric pressure. The polymer obtained is then flown as a rod, cooled in a tank of water, and pellets are obtained by cutting the rod.
The PA MeBHT10 polymer obtained exhibits an excellent flexibility and is transparent.
The viscosity index is 177.5 mL/g, the Mn=16140 g/mol, the Mw=41990 g/mol and polydispersity index is equal to 2.60.

Thermal analysis shows that the PA MeBHT10 is semi-crystalline and has the following thermal characteristics:
Tg= 13 °C, Tc= 107 °C, Tm= 154 °C, ΔHf = 45 J/g. The polyamide has a Tg which is below ambient temperature, i.e. 23 °C.

The pellets are dried overnight at 90 °C under vacuum before preparing mini-iso bars by injection. 10g of the pellets are placed in a twin-screw micro-extruder (or « micro-compounder ») DSM MIDI 2000 (volume 15 cm³) which is already heated at 180°C and with a screw speed of 100 rpm. After 2 minutes residence, the melted polymer is injected with the help of a micro-press injector associated to the « micro-compounder » in a mold regulated to 23 °C to form a bar with the following dimensions 90x13x1.6 mm³. The bars are transparent and very flexible.

The elastic modulus E' at 23 °C is 860 MPa ± 10MPa, at 30 °C is 700MPa ± 10MPa, at 40 °C is 500 MPa ± 10MPa and at 50 °C is 400 MPa ±10MPa. The alpha transition temperature is determined at 22 °C.

In the same conditions, a Rilsan^{®} PA12 AESNO from Arkema gives the following results: the modulus E' at 23 °C is 1580 MPa ± 50MPa, at 30 °C is 1520 MPa ± 50MPa, at 40 °C is 1350 MPa ± 50 MPa and at 50 °C is 820 MPa ± 10MPa. The alpha transition temperature is determined at 51 °C.

It thus appears that the PA MeBHT10 is much more flexible that the PA12 as its elastic modulus E' is around twice as low between 30 °C to 50 °C than the one from PA12. From this point of view the PA MeBHT10 represents an improved solution compared to PA 12.

### Example 2: PA MeBHT6

The PA MeBHT6 is synthesized according to the process disclosed in Example 1 but with the following amounts of monomers: 90.371 g of N-(6-aminohexyl)-N-methyl-1,6-hexanediamine at 97.2% (i.e. 0.383 mol), 55.958 g adipic acid at 100% (i.e. 0.383 mol), 128 g of water and 2 g of an antifoam agent Silcolapse 5020.

The PA MeBHT6 polymer obtained exhibits an excellent flexibility and is transparent.

The viscosity index is 221.3 mL/g, the Mn=16260 g/mol, the Mw=28570 g/mol and polydispersity index is equal to 1.76.

Thermal analysis shows that the PA MeBHT6 is semi-crystalline and has the following thermal characteristics:
Tg= 21 °C, Tc= 118 °C, Tm= 168 °C, ΔHf = 41 J/g. The polyamide has a Tg which is close to ambient temperature, i.e. 23 °C.

The pellets are dried overnight at 90 °C under vacuum before shaping by injection. 10g of the pellets are placed in a twin-screw micro-extruder (or « micro-compounder ») DSM MIDI 2000 (volume 15 cm³) which is already heated at 180°C and with a screw speed of 100 rpm. After 2 minutes residence, the melted polymer is injected with the help of a micro-press injector associated to the « micro-compounder in a mold regulated to 23 °C to form a bar with the following dimensions 90x13x1.6 mm³. The bars are perfectly transparent and very flexible.

The elastic modulus E' at 23 °C is 810 MPa ± 50MPa, at 30 °C is 660MPa ± 10MPa, at 40 °C is 500 MPa ± 10MPa and at 50 °C is 420 MPa ±10MPa. It appears that the PA MeBHT6 obtained exhibits a flexibility similar to PA MeBHT10 even if it contains a shorter and more rigid diacid (adipic acid vs sebacic acid). This PA MeBHT6 is also more flexible than PA12.

### Example 3: mixture of PA MeBHT6/Elastomere 90/10 w/w

The elastomer is Exxelor VA 1801 marketed by ExxonMobil.

The pellets of PA MeBHT6 are dried overnight at 90 °C under vacuum before use of 9g of these pellets and 1 g of elastomer Exxelor VA1801 which are placed in a twin-screw micro-extruder (or « micro-compounder ») DSM MIDI 2000 (volume 15 cm³) which is already heated at 180 °C and with a screw speed of 100 rpm. After 2 minutes residence, the melted polymer is injected with the help of a micro-press injector associated to the « micro-compounder » in a mold regulated to 23 °C to form a bar with the following dimensions 90x13x1.6 mm³. The bars are very flexible and translucid.

The elastic modulus E' at 23°C is 650 MPa ± 10MPa, at 30°C is 530MPa ± 10MPa, at 40°C is 400 MPa ± 10MPa and at 50°C is 340 MPa ±10MPa.

At all the measured temperatures the composition has lower values of elastic modulus E' than the virgin PA MeBHT6, it is thus more flexible.

### Exemple 4: polyimide PI MeBHTPMA

In a reactor of 250 mL, 5.39 g (0.02068 mol) of pyromellitic acid (PMA) at 97.5 % (Sigma-Aldrich) are dissolved in 31.9 g of pure ethanol under stirring. In this reactor is added, with a push syringe in 1 h, a 15% ethanolic solution 4.88 g (0.02068 mol) of N-(6-aminohexyl)-N-methyl-1,6-hexanediamine (called MeBHT, RN CAS : 41318-22-3) at 97.2%. 13 g of ethanol are used for rinsing the syringe after the addition of the ethanolic solution of the diamine. The reaction medium is stirred at ambient temperature for 2h. The polyimide salt formed precipitates and is recovered par total evaporation of ethanol at 60 °C under reduced pressure. The salt powder is white and thin. The salt is then heated to 210 °C under a steal of nitrogen for 5h to obtain the polyimide.

The polyimide is semi-crystalline, it has a crystallisation at cooling at 187 °C (the crystallisation enthalpy being 34 J/g) and a multiple meting with peaks at 209 °C, 219 °C and 222 °C (melting enthalpy being 34 J/g).

### Example 5: analysis of water reuptake by immersion at ambient temperature of polyamide bars

Bars of respectively PA MeBHT6, PA MeBHT10 and PA 66 Stabamid^{®} 27AE1 marketed by Rhodia having the following dimension: 90x13x1,6 mm³, are placed in water at 25 °C for 24h.

Water reuptake is defined by the ratio R=(m(final)-m(initial))/m(initial)) wherein m(initial) and m(final) correspond respectively to the weight of the bars before and after the test. For PA MeBHT6 the water reuptake is 6.8%, for PA MeBHT10 it is 1.5%, and for PA 66 it is 2%.

The water reuptake is surprisingly very high for PA MeBHT6 while being good for PA MeBHT10, as it is lower than the one observed for PA 66. Having a low water reuptake is very interesting for having a good dimensional stability.

In another experiment, the water reuptake is evaluated by immersion of the previous bars in water at 25 °C up to the weight reaches an equilibrium (water reuptake at equilibrium at 25 °C). Water reuptake at equilibrium at 25 °C for PA MeBHT6 is 15%, for PA MeBHT10 it is 5.5% and for PA 66 it is 8.5%.

With such a high and fast water reuptake, PA MeBHT6 is suitable for textile application for the well-being (comfort) feeling.

### Example 6 : spinning of PA MeBHT6

The PA MeBHT6 is synthesized according to the process disclosed in Example 1 but with the following amounts of monomers: 1376.7 g of N-(6-aminohexyl)-N-methyl-1,6-hexanediamine at 97.1 % (i.e. 5.827 mol), 851.6 g adipic acid at 100% (i.e. 5.827 mol), 1366 g of water and 2 g of an antifoam agent Silcolapse 5020.
Fibers of this polyamide are prepared according to the following process. Pellets of PA MeBHT6 are dried to finally obtain a moisture content of 900 ppm an then introduce in a spinning machine set as following: extruder heating profile 180 °C/185 °C/190 °C/190 °C/195 °C, 0.65 kg/h output, 10µm metallic filtration pack (48 mm diameter), production of filaments through a 12 holes extrusion die (0.3x3D), take-up on the winder of the filaments at a speed of 450 m/min (BARMAG SW1).
Fibers produced are stretched up to a stretching ratio of 3 without any issue. Fibers of polyamide 66 Stabamid^{®} 26AE2 marketed by Solvay are prepared using the same equipment but with different spinning parameters (extruder heating profile 280 °C/285 °C/290 °C/290 °C/295 °C). Stretching with a stretching ratio of 3 was performed.
The surface of the PA MeBHT6 fibers seems softer than the PA 66 fibers. We clearly observe that the water reuptake is quicker and higher for PA MeBHT6 compared to PA66, which is useful for textile application when higher comfort is required.

### Example 7 : PA MeBHT12

The PA MeBHT12 is synthesized according to the process disclosed in Example 1 but with the following amounts of monomers: 1505.5 g of N-(6-aminohexyl)-N-methyl-1,6-hexanediamine at 97.1 % (i.e. 6.372 mol), 1473.5 g 1,12-dodecanedioic acid at 99,6% (i.e. 6.372 mol), 2750 g of water and 2 g of an antifoam agent Silcolapse 5020.
The PA MeBHT12 polymer obtained exhibits an excellent flexibility.

Thermal analysis shows that the PA MeBHT12 is semi-crystalline and has the following thermal characteristics:
Tg= 8°C, Tc= 109 °C, Tm= 156 °C, ΔHf = 51 J/g.

The pellets are dried overnight at 90 °C under vacuum before shaping by injection. Injection molding of ISO527 bars is achieved using a Arburg injection molding machine with barrel temperature set at 180 °C for all heating zones and mold temperature set at 25 °C. The bars are perfectly transparent and very flexible.

Tensile properties are determined according to ISO 527/1 A. Tensile modulus is equal to 721 MPa, tensile strength at yield is equal to 32.8 MPa, tensile strength at break is equal to 22.1 MPa, and elongation at break is equal to 127%. Impact properties (Charpy notched) are determined according to ISO179/1eA. Impact strength is equal to 6.0 kJ/m².

Water reuptake at equilibrium at 25 °C is determined as described in example 5. Water reuptake at equilibrium at 25 °C for PA MeBHT12 is 3.5%. PA MeBHT12 has a water reuptake similar to the one of PA 610.

PA MeBHT12 can be used at the place of plasticized long-chain polyamides such as PA 11, PA 12, PA 610, PA 1010, PA 1012, PA 1212.

## Claims

1. Polymer A, obtained through polymerisation of at least:
a. one or several alkyl-BHT diamine chosen from methyl-bis hexamethylene triamine, ethyl-bis hexamethylene triamine, n-propyl-bis hexamethylene triamine and/or i-propyl-bis hexamethylene triamine, and
b. one or several polycarboxylic acid, chosen from aliphatic polycarboxylic acids, aryl polycarboxylic acids, alkylaryl polycarboxylic acids and arylalkyl polycarboxylic acids,
said polymer A comprising a minimum amount of alkyl-BHT diamine of 1 mol% relative to the total mole amount of diamine monomers comprised in the polymer, and
which is a polyamide [polyamide (A1)] comprising recurring units derived from:
(i-1) a dicarboxylic acid component [acid component (AA)], wherein said acid component (AA) comprises at least one long chain aliphatic dicarboxylic acid or derivative thereof [acid (AL_{long})], said acid (AL_{long}) having at least 8 carbon atoms, and, optionally, at least one diacid different from said acid (AL_{long}); and
(i-2) a diamine component [amine component (NN)] comprising at least one alkyl-BHT diamine selected from the group consisting of methyl-bis hexamethylene triamine, ethyl-bis hexamethylene triamine, n-propyl-bis hexamethylene triamine and i-propyl-bis hexamethylene triamine, and, optionally, at least one amine different from alkyl-BHT diamine, and optionally recurring units derived from at least one of lactams and amino-acids..

2. Polymer according to Claim 1, **characterized in that** the amount of Alkyl-BHT, and in particular of Me-BHT, is
- more or equal to 10 mol%, more or equal to 20 mol %, more or equal to 30 mol %, more or equal to 40 mol %, more or equal to 50 mol %, more or equal to 60 mol %, more or equal to 70 mol %, more or equal to 80 mol %, more or equal to 90 mol %, more or equal to 95 mol %, or is 100 mol% relative to the total amount of diamine monomers in the polymer and/or
- less than 100 mol%, in particular less than 99 mol%, and more particularly less than 98 mol%, or even less than 95 mol% relative to the total amount of diamine monomers in the polymer.

3. Polymer according to Claim 1 or 2, **characterized in that** it also comprise at least one other diamine, in particular responding to the following formula H₂N-R-NH₂ wherein R is an aliphatic, an aromatic, an arylaliphatic or an alkylaromatic radical, more particularly the diamine R radical, especially when free of heteroatom such as oxygen, comprises from 1 to 36 carbon atoms and more particularly from 4 to 14 carbon atoms.

4. Polymer according to any one of claims 1 to 3, **characterized in that** the polymer comprises repeating units arising from lactams or amino-acids, in particular chosen from caprolactam, 6-aminohexanoic acid, 10-aminodecanoic acid, 11-aminoundecanoic acid, and 12-dodecanolactam.

5. Polymer according to anyone of the preceding claims, wherein said polyamide (A1) comprises recurring units derived from:
(i-1') an acid component (AA) comprising at least one acid (AL_{long}) selected from the group consisting of suberic acid [HOOC-(CH₂)₆-COOH], azelaic acid [HOOC-(CH₂)₇-COOH], sebacic acid [HOOC-(CH₂)₈-COOH], undecanedioic acid [HOOC-(CH₂)₉-COOH], dodecandioic acid [HOOC-(CH₂)₁₀-COOH], tetradecandioic acid [HOOC-(CH₂)₁₁-COOH], pentadecanedioic acid [HOOC-(CH₂)₁₃-COOH], hexanedecanedioic acid [HOOC-(CH₂)₁₄-COOH], andoctanedecanedioic acid [HOOC-(CH₂)₁₆-COOH], and, optionally, at least one diacid different from said acid (AL_{long}); and
(i-2) an amine component (NN) comprising methyl-bis
hexamethylene triamine, and, optionally, at least one amine different from said methyl-bis hexamethylene triamine, and
optionally recurring units derived from at least one of lactams and amino-acids

6. Polymer according to any one of claims 1 to 5, **characterized in that** it
- comprises at least one mono-functional compound having one functionality able to react with amine or carboxylic acid functions
- comprises at least one poly-functional compounds having more than three functionality able to react with amine or carboxylic acid functions,
- presents a stoechiometric desequilibrium r=[poly carboxylic acid]/[diamine], wherein r may range from 0.8 to 1.2, and/or
- has a number average molecular weight, Mn, of at least 10 000 g/mol.

7. Composition comprising
- at least 20 % by weight of a polymer A according to anyone of claims 1 to 6,
- optionally phosphorous acid, and
- at least 0.1 % by weight of additional compound(s),
wherein the % by weight are based on the total weight of the composition, more particularly the composition
- comprises an amount of polymer A of at least 30 wt%, in particular at least 40 wt% based on the total weight of the composition,
- comprises at least one reinforcing and/or bulking filler, in particular in an amount of 0.1 to 70% by weight relative to the total weight of the composition,
- comprises at least one impact modifier, in particular from 0.1 to 30 % by weight relative to the total weight of the composition, and/or
- comprises at least one of lubricants, flame retardants, plasticizers, nucleating agents, catalysts, antioxidants, antistatic agents, colorants, mattifying agents, molding aids.

## Patentansprüche

1. Polymer A, erhalten durch Polymerisation von mindestens :
a. einem oder mehreren Alkyl-BHT-Diaminen, die aus Methylbishexamethylentriamin, Ethylbishexamethylentriamin, n-Propylbishexamethylentriamin und/oder i-Propylbishexamethylentriamin ausgewählt sind, und
b. einer oder mehreren Polycarbonsäuren, die aus aliphatischen Polycarbonsäuren, Arylpolycarbonsäuren, Alkylarylpolycarbonsäuren und Arylalkylpolycarbonsäuren ausgewählt sind,
wobei das Polymer A eine Mindestmenge an Alkyl-BHT-Diamin von 1 Mol- %, bezogen auf die gesamte molare Menge an Diamin-Monomeren in dem Polymer, umfasst und
es sich um ein Polyamid [Polyamid (A1)] handelt, das Wiederholungseinheiten, die sich von :
(i-1) einer Dicarbonsäurekomponente [Säurekomponente (AA)], wobei die Säurekomponente (AA) mindestens eine langkettige aliphatische Dicarbonsäure oder ein Derivat davon [Säure (AL_{lang})], wobei die Säure (AL_{lang}) mindestens 8 Kohlenstoffatome aufweist, und gegebenenfalls mindestens eine von der Säure (AL_{lang}) verschiedene Disäure umfasst; und
(i-2) einer Diaminkomponente [Aminkomponente (NN)], die mindestens ein Alkyl-BHT-Diamin, das aus Methylbishexamethylentriamin, Ethylbishexamethylentriamin, n-Propylbishexamethylentriamin und/oder i-Propylbishexamethylentriamin ausgewählt ist, und gegebenenfalls mindestens ein von Alkyl-BHT-Diamin verschiedenes Amin umfasst,
ableiten, und gegebenenfalls Wiederholungseinheiten, die sich von Lactamen und/oder Aminosäuren ableiten, umfasst.

2. Polymer nach Anspruch 1, **dadurch gekennzeichnet, dass** die Menge an Alkyl-BHT und insbesondere Me-BHT
- größer oder gleich 10 Mol- %, größer oder gleich 20 Mol- %, größer oder gleich 30 Mol- %, größer oder gleich 40 Mol- %, größer oder gleich 50 Mol- %, größer oder gleich 60 Mol- %, größer oder gleich 70 Mol- %, größer oder gleich 80 Mol- %, größer oder gleich 90 Mol- %, größer oder gleich 95 Mol- % oder 100 Mol- %, bezogen auf die Gesamtmenge an Diaminmonomeren in dem Polymer, und/oder
- kleiner als 100 Mol- %, insbesondere kleiner als 99 Mol- % und spezieller kleiner als 98 Mol- % oder sogar weniger als 95 Mol- %, bezogen auf die Gesamtmenge an Diaminmonomeren in dem Polymer,
ist.

3. Polymer nach Anspruch 1 oder 2, **dadurch gekennzeichnet, dass** es außerdem mindestens ein anderes Diamin umfasst, das insbesondere der folgenden Formel H₂N-R-NH₂ entspricht, wobei R für einen aliphatischen, einen aromatischen, einen arylaliphatischen oder einen alkylaromatischen Rest steht und im Speziellen der R-Rest des Diamins insbesondere dann, wenn er von Heteroatomen wie Sauerstoff frei ist, 1 bis 36 Kohlenstoffatome und spezieller 4 bis 14 Kohlenstoffatome umfasst.

4. Polymer nach einem der Ansprüche 1 bis 3, **dadurch gekennzeichnet, dass** das Polymer Wiederholungseinheiten umfasst, die sich aus Lactamen oder Aminosäuren ergeben, die insbesondere aus Caprolactam, 6-Aminohexansäure, 10-Aminodecansäure, 11-Aminoundecansäure und 12-Dodecanolactam ausgewählt sind.

5. Polymer nach einem der vorhergehenden Ansprüche, wobei das Polyamid (A1) Wiederholungseinheiten, die sich von :
(i-1') einer Säurekomponente (AA), die mindestens eine Säure (AL_{lang}), die aus der Gruppe bestehend aus Suberinsäure (HOOC-(CH₂)₆-COOH), Azealinsäure (HOOC-(CH₂)₇-COOH), Sebacinsäure (HOOC-(CH₂)₈-COOH), Undecandisäure (HOOC-(CH₂)₉-COOH), Dodecandisäure (HOOC-(CH₂)₁₀-COOH), Tetradecandisäure (HOOC-(CH₂)₁₁-COOH), Pentadecandisäure (HOOC-(CH₂)₁₃-COOH), Hexandecandisäure (HOOC-(CH₂)₁₄-COOH) und Octandecandisäure (HOOC-(CH₂)₁₆-COOH) ausgewählt ist, und gegebenenfalls mindestens eine von der Säure (AL_{lang}) verschiedene Disäure umfasst; und
(i-2) einer Aminkomponente (NN), die Methylbishexamethylentriamin und gegebenenfalls mindestens ein von dem Methylbishexamethylentriamin verschiedenes Amin umfasst,
ableiten, und gegebenenfalls Wiederholungseinheiten, die sich von Lactamen und/oder Aminosäuren ableiten, umfasst.

6. Polymer nach einem der Ansprüche 1 bis 5, **dadurch gekennzeichnet, dass** es
- mindestens eine monofunktionelle Verbindung mit einer Funktionalität, die mit Amin- oder Carbonsäurefunktionen reagieren kann, umfasst,
- mindestens eine polyfunktionelle Verbindung mit mehr als drei Funktionalitäten, die mit Amin- oder Carbonsäurefunktionen reagieren können, umfasst,
- ein stöchiometrisches Ungleichgewicht r = [Polycarbonsäure]/[Diamin] aufweist, wobei r im Bereich von 0,8 bis 1,2 liegen kann, und/oder
- ein zahlenmittleres Molekulargewicht Mn von mindestens 10.000 g/mol aufweist.

7. Zusammensetzung, umfassend
- mindestens 20 Gew.- % eines Polymers A nach einem der Ansprüche 1 bis 6,
- gegebenenfalls Phosphonsäure und
- mindestens 0,1 Gew.- % einer oder mehrerer zusätzlicher Verbindungen,
wobei sich die Gew.- %-Angaben auf das Gesamtgewicht der Zusammensetzung beziehen, wobei die Zusammensetzung spezieller
- eine Menge an Polymer A von mindestens 30 Gew.- %, insbesondere mindestens 40 Gew.- %, bezogen auf das Gesamtgewicht der Zusammensetzung, umfasst,
- mindestens einen verstärkenden und/oder streckenden Füllstoff, insbesondere in einer Menge von 0,1 bis 70 Gew.- %, bezogen auf das Gesamtgewicht der Zusammensetzung, umfasst,
- mindestens einen Schlagzähigkeitsmodifikator, insbesondere 0,1 bis 30 Gew.- %, bezogen auf das Gesamtgewicht der Zusammensetzung, umfasst, und/oder
- Schmiermittel, Flammschutzmittel, Weichmacher, Nukleierungsmittel, Katalysatoren, Antioxidantien, Antistatika, Farbmittel, Mattierungsmittel und/oder Formhilfsmittel umfasst.

## Revendications

1. Polymère A, obtenu par polymérisation d'au moins :
a. une ou plusieurs alkyl-BHT-diamines choisies parmi la méthyl-bishexaméthylènetriamine, l'éthyl-bishexaméthylènetriamine, la n-propyl-bishexaméthylènetriamine et/ou la i-propyl-bishexaméthylènetriamine, et
b. un ou plusieurs acides polycarboxyliques, choisis parmi des acides polycarboxyliques aliphatiques, des acides arylpolycarboxyliques, des acides alkylarylpolycarboxyliques et des acides arylalkylpolycarboxyliques,
ledit polymère A comprenant une quantité minimale d'alkyl-BHT-diamine de 1 % en moles par rapport à la quantité molaire totale de monomères de diamine compris dans le polymère, et
qui est un polyamide [polyamide (A1)] comprenant des motifs récurrents dérivés de:
(i-1) un composant d'acide dicarboxylique [composant acide (AA)], ledit composant acide (AA) comprenant au moins un acide dicarboxylique aliphatique à chaîne longue ou un dérivé de celui-ci [acide (AL_{long})], ledit acide (AL_{long}) ayant au moins 8 atomes de carbone, et, facultativement, au moins un diacide différent dudit acide (AL_{long}) ; et
(i-2) un composant diamine [composant amine (NN)] comprenant au moins une alkyl-BHT-diamine choisie dans le groupe constitué de la méthyl-bishexaméthylènetriamine, l'éthyl-bishexaméthylènetriamine, la n-propyl-bishexaméthylènetriamine et la i-propyl-bishexaméthylènetriamine, et, facultativement, au moins une amine différente d'une alkyl-BHT-diamine, et facultativement des motifs récurrents dérivés d'au moins l'un parmi des lactames et des acides aminés.

2. Polymère selon la revendication 1, **caractérisé en ce que** la quantité d'alkyl-BHT, et en particulier de Me-BHT, est
- supérieure ou égale à 10 % en moles, supérieure ou égale à 20 % en moles, supérieure ou égale à 30 % en moles, supérieure ou égale à 40 % en moles, supérieure ou égale à 50 % en moles, supérieure ou égale à 60 % en moles, supérieure ou égale à 70 % en moles, supérieure ou égale à 80 % en moles, supérieure ou égale à 90 % en moles, supérieure ou égale à 95 % en moles, ou est 100 % en moles par rapport à la quantité totale de monomères de diamine dans le polymère et/ou
- inférieure à 100 % en moles, en particulier inférieure à 99 % en moles, et plus particulièrement inférieure à 98 % en moles, ou même inférieure à 95 % en moles par rapport à la quantité totale de monomères de diamine dans le polymère.

3. Polymère selon la revendication 1 ou 2, **caractérisé en ce qu'**il comprend en outre au moins une autre diamine, en particulier satisfaisant à la formule suivante H₂N-R-NH₂ dans laquelle R est un radical aliphatique, aromatique, arylaliphatique ou alkylaromatique, plus particulièrement le radical R diamine, en particulier lorsqu'il est exempt d'hétéroatome tel que l'oxygène, comprend de 1 à 36 atomes de carbone et plus particulièrement de 4 à 14 atomes de carbone.

4. Polymère selon l'une quelconque des revendications 1 à 3, **caractérisé en ce que** le polymère comprend des motifs de répétition provenant de lactames ou d'acides aminés, en particulier choisis parmi le caprolactame, l'acide 6-aminohexanoïque, l'acide 10-aminodécanoïque, l'acide 11-aminoundécanoïque, et le 12-dodécanolactame.

5. Polymère selon l'une quelconque des revendications précédentes, dans lequel ledit polyamide (A1) comprend des motifs récurrents dérivés de :
(i-1') un composant acide (AA) comprenant au moins un acide (AL_{long}) choisi dans le groupe constitué de l'acide subérique [HOOC-(CH₂)₆-COOH], l'acide azélaïque [HOOC-(CH₂)₇-COOH], l'acide sébacique [HOOC-(CH₂)₈-COOH], l'acide undécanedioïque [HOOC-(CH₂)₉-COOH], l'acide dodécanedioïque [HOOC-(CH₂)₁₀-COOH], l'acide tétradécanedioïque [HOOC-(CH₂)₁₁-COOH], l'acide pentadécanedioïque [HOOC-(CH₂)₁₃-COOH], l'acide hexanedécanedioïque [HOOC-(CH₂)₁₄-COOH], l'acide andoctanedécanedioïque [HOOC-(CH₂)₁₆-COOH], et, facultativement, au moins un diacide différent dudit acide (AL_{long}) ; et
(i-2) un composant d'amine (NN) comprenant la méthyl-bishexaméthylènetriamine, et, facultativement, au moins une amine différente de ladite méthyl-bishexaméthylènetriamine, et
facultativement des motifs récurrents dérivés d'au moins l'un parmi des lactames et des acides aminés.

6. Polymère selon l'une quelconque des revendications 1 à 5, **caractérisé en ce qu'**il
- comprend au moins un composé monofonctionnel ayant une fonctionnalité capable de réagir avec des fonctions amine ou acide carboxylique
- comprend au moins un composé polyfonctionnel ayant plus de trois fonctionnalités pouvant réagir avec des fonctions amine ou acide carboxylique,
- présente un déséquilibre stoechiométrique r=[acide
polycarboxylique]/[diamine], où r peut être dans la plage de 0,8 à 1,2, et/ou
- a un poids moléculaire moyen en nombre, Mn, d'au moins 10 000 g/mol.

7. Composition comprenant
- au moins 20 % en poids d'un polymère A selon l'une quelconque des revendications 1 à 6,
- facultativement de l'acide phosphoreux, et
- au moins 0,1 % en poids de composé(s) additionnel(s),
où les % en poids sont basés sur le poids total de la composition,
plus particulièrement la composition
- comprend une quantité de polymère A d'au moins 30 % en poids, en particulier au moins 40 % en poids sur la base du poids total de la composition,
- comprend au moins une charge de renforcement et/ou dilution, en particulier dans une quantité de 0,1 à 70 % en poids par rapport au poids total de la composition,
- comprend au moins un agent de résistance aux chocs, en particulier de 0,1 à 30 % en poids par rapport au poids total de la composition, et/ou
- comprend au moins l'un parmi des lubrifiants, des agents ignifugeants, des plastifiants, des agents de nucléation, des catalyseurs, des antioxydants, des agents antistatiques, des colorants, des agents matifiants, des adjuvants de moulage.
